(19) Europäisches Patentamt
European Patent Office
Office européen des brevets

(11) Veröffentlichungsnummer: **0 676 444 A2**

# (12) EUROPÄISCHE PATENTANMELDUNG

(21) Anmeldenummer: **95104567.3**

(51) Int. Cl.6: **C08K 5/20**, C08L 101/00

(22) Anmeldetag: **28.03.95**

(30) Priorität: **11.04.94 DE 4412366**

(43) Veröffentlichungstag der Anmeldung:
**11.10.95 Patentblatt 95/41**

(84) Benannte Vertragsstaaten:
**AT BE CH DE DK ES FR GB GR IE IT LI LU NL PT SE**

(71) Anmelder: **HOECHST AKTIENGESELLSCHAFT**
**Brüningstrasse 50**
**D-65929 Frankfurt am Main (DE)**

(72) Erfinder: **Breitwieser, Michael**
**Karlsbader Strasse 46**
**D-86146 Augsburg (DE)**
Erfinder: **Wanzke, Wolfgang, Dr.**
**Mendelstrasse 11a**
**D-86405 Meitingen (DE)**
Erfinder: **Vybiral, Reinhard, Dr.**
**Rossfeldstrasse 5**
**D-84504 Burgkirchen (DE)**

## (54) Antistatisch ausgerüstete Kunststoff-Formmasse.

(57) Eine Kunststoff-Formmasse aus einem thermoplastischen oder duroplastischen Kunststoff, welche eine Verbindung der Formel I

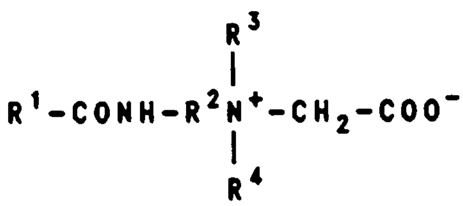

(I)

worin $R^1$ eine gesättigte oder ungesättigte aliphatische Kohlenwasserstoffgruppe mit 8 oder mehr C-Atomen ist, $R^2$ eine $C_1$-$C_6$-Alkylgruppe ist und
$R^3$ und $R^4$ gleich oder verschieden sind und eine symmetrische oder unsymmetrische Alkylgruppe, Hydroxyalkylgruppe oder Polyoxyalkylengruppe bedeuten, als Antistatikum enthält, zeichnet sich durch eine gute antistatische Ausrüstung auch bei niedrigen Einsatzmengen aus.

Insbesondere Formmassen auf Polyolefinbasis können durch die neue Anwendung der genannten Verbindungen dauerhaft antistatisch ausgerüstet werden.

EP 0 676 444 A2

Die Erfindung bezieht sich auf die Verwendung bestimmter Betaine als Antistatika für thermoplastische Kunststoffe, insbesondere Polyolefine.

Hohe Durchgangs- und spezifische Oberflächenwiderstände haben Kunststoffen einen bedeutenden Platz als isolierende Werkstoffe auf dem Elektro- und Elektroniksektor verschafft. Die gleichen strukturbedingten Eigenschaften führen jedoch bei allen Trennvorgängen von anderen Medien zu einer starken elektrostatischen Aufladung der Oberfläche. Diese ist aus verschiedenen Gründen unerwünscht:

- Bei der Masse der Gebrauchsgegenstände soll aus ästhetischen und hygienischen Gesichtspunkten eine Staubanziehung bei Lagerung und Gebrauch vermieden werden.
- Bei der Verarbeitung von Kunststoffteilen mit großer Oberfläche, beispielsweise Folien, Fasern oder Pulver, treten durch die statische Aufladung Kräfte auf, die den Verarbeitungsprozeß empfindlich stören. Sie können das ordnungsgemäße Aufwickeln von Kalanderfolien oder von Fasern verhindern. Folienbahnen können beim Verarbeiten oder auf Abfüllanlagen in unerwünschtem Maße aneinander haften. Bei der Förderung von Pulvern kann es zur Klumpen- oder Brückenbildung kommen. Auch die Bedruckbarkeit von Fertigteilen wird durch statische Aufladung beeinträchtigt.
- Entladungsvorgänge können zur Beschädigung verpackter Produkte führen.
- Funkenentladung kann schwerwiegende Unfälle nach sich ziehen, beispielsweise wo Feuer- und Explosionsgefahr beim Umgang mit leichtentzündlichen Gasen, Dämpfen und Stäuben, wie bei Lösemitteln oder im Bergbau bestehen.

Für alle diese Gebiete versucht man, durch geeignete Additive die Aufladbarkeit des Kunststoffs zu vermindern.

Eine Erhöhung der Leitfähigkeit von Kunststoffen zur Vermeidung von Aufladungen kann auf drei Wegen geschehen: Oberflächliches Auftragen eines "externen" Antistatikums aus einer Lösung, Einarbeiten eines "internen" (inkorporierbaren) Antistatikums in den Kunststoff oder Einarbeiten von Zuschlagstoffen mit elektrischer Leitfähigkeit (Graphit, Metalle, organische Halbleiter).

Zuschlagstoffe mit elektrischer Leitfähigkeit werden eingesetzt, wenn der Oberflächenwiderstand des Fertigteils weniger als $10^8$ Ω sein soll. Wegen der hohen Zugabemengen von 2 bis 70 % werden die mechanischen Eigenschaften beeinträchtigt.

Externe und interne Antistatika sind Chemikalien, die in der Regel zusammen mit der Luftfeuchtigkeit an der Oberfläche des Kunststoffs einen leitfähigen Film bilden. Dies kann durch die Erzeugung eines reinen Feuchtigkeitsfilms durch wasseranziehende Substanzen oder durch Abscheidung eines organischen Elektrolyten geschehen.

Beide Gruppen haben ein ähnliches Aufbauprinzip: Ein hydrophobes Ende sorgt für die Verankerung des Additivs auf der Polymeroberfläche, ein stark polares Ende absorbiert Wassermoleküle, durch die nach dem Prinzip der Ionenleitfähigkeit Aufladungen beseitigt werden.

Externe Antistatika werden aus wäßrigen oder lösemittelhaltigen Präparationen auf die Oberfläche aufgebracht. Wirksam sind mehr oder weniger alle grenzflächenaktive Verbindungen, außerdem auch zahlreiche hygroskopische Substanzen, wie Glycerin, Polyole oder Polyglykole, denen das Merkmal der Grenzflächenaktivität fehlt. Bei internen Antistatika wird das hydrophobe Molekülende fest in der Masse des Polymeren verankert.

Die meisten bekannten Antistatika lassen sich in kationaktive, anionaktive und nichtionogene Verbindungen unterteilen.

Kationaktive Verbindungen bestehen in der Regel aus einem voluminösen, oft einen langen Alkylrest enthaltenden Kation (beispielsweise einem quarternären Ammonium-Phosphonium- oder Sulfoniumsalz), wobei die quarternäre Gruppe auch in einem Ringsystem (beispielsweise Imidazolin) auftreten kann. Das Anion ist in den meisten Fällen das vom Quarternierungsprozeß herrührende Chlorid-, Methylensulfat- oder Nitration. Als Handelsprodukte haben sich vor allem die quarternären Ammoniumsalze durchgesetzt.

Kationaktive Substanzen wirken am besten in polaren Polymeren. Ihre Anwendung wird allerdings durch ihren negativen Einfluß auf die Thermostabilität gewisser Polymeren eingeschränkt.

Anionaktive Verbindungen haben als aktiven Molekülteil ein Anion (meist ein Alkylsulfonat, -sulfat oder -phosphat, ein Dithiocarbamat oder Carboxylat). Als Kation dienen oft Alkali-, seltener Erdalkalimetalle. In der Praxis haben sich vor allem Natriumalkylsulfonate durchgesetzt, die eine gute antistatische Wirkung in polaren Polymeren entwicklen. Nachteilig ist , daß ihr Einsatz aufgrund der Trübungsneigung auf gedeckte Einfärbungen beschränkt ist. Wegen ihres sehr hohen Schmelzbereiches lassen sich Natriumalkylsulfonate oftmals nur sehr schwierig homogen in den auszurüstenden Kunststoff einarbeiten, ihr hydrophiler Charakter erschwert die Lagerung und Dosierung.

Bei nichtionogenen Verbindungen, beispielsweise Polyethylenglykolestern oder - ethern, Fettsäureestern oder -ethanolamiden, Mono- oder Diglyceriden oder ethoxylierten Fettaminen, handelt es sich um ungeladene, grenzflächenaktive Moleküle von wesentlich geringerer Polarität als die der ionogenen Verbindungen. Derartige Produkte sind meist Flüssigkeiten oder wachsartige Substanzen mit niedrigem Erweichungsbereich. Ihre geringe Polarität und gute Verträglichkeit macht Vertreter dieser Verbindungsklassen zu idealen internen Antsitatika für Polyolefine. Fettsäureester ein- und mehrwertiger Alkohole führen in hohen Einsatzmengen aber auch in polaren Kunststoffen zu akzeptablen antistatischen Ausrüstungen und ermöglichen im Gegensatz zu Alkylsulfonaten die Herstellung transparenter Formteile. Neben der notwendigen hohen Einsatzkonzentration, welche zu Verarbeitungsproblemen und zur Beeinflussung mechanischer und optischer Formteileigenschaften führen kann, hat sich die teilweise pastenförmige Konsistenz dieser Produkte mit Stockpunkten oberhalb der Raumtemperatur als nachteilig für den Einsatz dieser Produkte erwiesen.

Zur Beurteilung der Wirkung von Antistatika in Formmassen eignen sich vor allem zwei Methoden. Bei der Messung des Oberflächenwiderstandes nach DIN 53482 (und seit 1.12.93, DIN IEC 93 (VDE 0303 Teil 30)) wird der elektrische Widerstand der Oberfläche durch eine spezielle Elektrode gemessen. Die meisten organischen Polymeren, wie die Polyolefine, haben von Natur aus Oberflächenwiderstände $\geqq 10^{15}$ Ω, entsprechend einem R0-Wert (= dekadischer Logarithmus des Oberflächenwiderstands) von R0 = 15. Formmassen, welche Oberflächenwiderstände kleiner als R0 = 11 ($10^{11}$ Ω) aufweisen, gelten als sehr gut antistatisch ausgerüstet. Hervorragend sind noch kleinere R0-Werte. Die zweite ebenfalls sehr aussagekräftige Methode, weil die Effektmessung das Phänomen Aufladung/Entladung der Oberfläche direkt erfaßt, ist die Bestimmung der Halbwertszeit. Dabei wird die Zeit gemessen, in der eine auf die Oberfläche des Prüfkörpers aufgebrachte Ladung auf die Hälfte des Ausgangswertes absinkt. Hervorragend antistatisch ausgerüstete Formmassen erreichen Halbwertszeiten unter 5 Sekunden.

Viele ionogene und nichtionogenen Substanzen, die als externe oder interne Antistatika in Kunststoffen eingesetzt werden können, sind in der Fachliteratur bereits beschrieben.

Unter anderem haben sich Betaine als prinzipiell wirksam erwiesen. Bekannt ist die antistatische Wirkung von Alkylbetainen in Polyolefinen (vgl. US 3 005 793). Weiterhin ist bekannt die Anwendung von Alkylaminoalkylbetainen als interne Antistatika in Polymeren (vgl. JP-Sho 44-13587).

Bei der Verwendung der bisher bekannten inkorporierbaren Antistatika treten verschiedene Nachteile auf, die sich in der Verarbeitung oder der Anwendung des ausgerüsteten Kunststoffs bemerkbar machen. Dazu gehören mangelnde Thermostabilität, hoher Schmelzbereich, Trübungsneigung, hohe Einsatzkonzentration und pastenförmige Konsistenz.

Stoffe mit länger anhaltender Wirkung (beispielsweise ethoxylierte Fettamine) zeigen an der Oberfläche von Polyolefinen oft erst nach vielen Tagen einen antistatischen Effekt. Substanzen, die rasch wirken, weil sie rasch an die Oberfläche migrieren, verursachen dagegen meist einen Oberflächenbelag, der beispielsweise die Beschreib- und Bedruckbarkeit oder die Siegelfähigkeit des Kunststoffs beeinträchtigt. Darüberhinaus verschlechtern Antistatika in vielen Fällen die Farbe und - bei klaren oder transluzenten Polymeren - die Transparenz der ausgerüsteten Formmassen.

Es wurde nun gefunden, daß bestimmte Alkylamidopropylbetaine ungewöhnlich rasch eine antistatische Wirkung in Polyolefinen entwickeln, ohne daß es zu nachteiligen Oberflächeneffekten kommt.

Die Erfindung betrifft somit eine antistatisch ausgerüstete Kunststoff-Formmasse, bestehend aus 94 bis 99,99 Gew.-%, bezogen auf die Formmasse, eines thermoplastischen oder duroplastischen Kunststoffs und 0,01 bis 6 Gew.-%, bezogen auf die Formmasse, einer Verbindung der Formel I

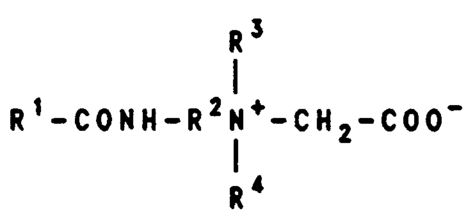

(I)

worin $R^1$ eine gesättigte oder ungesättigte aliphatische Kohlenwasserstoffgruppe mit 8 oder mehr C-Atomen ist,

$R^2$ eine $C_1$-$C_6$-Alkylgruppe ist und

$R^3$ und $R^4$ gleich oder verschieden sind und eine symmetrische oder unsymmetrische Alkylgruppe, Hydroxyalkylgruppe oder Polyoxyalkylengruppe bedeuten.

Die erfindungsgemäße Kunststoff-Formmasse enthält ein thermoplastisches oder duroplastisches organisches Polymer, beispielsweise eines der nachstehend aufgeführten:

1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen, wie beispielsweise von Cyclopenten oder Norbornen.

2. Mischungen der unter 1) genannten Polymeren, beispielsweise Mischungen von Polypropylen mit Polyethylen oder mit Polyisobutylen.

3. Copolymere von Mono- und Diolefinen untereinander oder mit anderen Vinylmonomeren, wie beispielsweise Ethylen-Propylen-Copolymere, Propylen-Buten-1-Copolymere,Propylen-Isobutylen-Copolymere,Ethylen-Buten-1-Copolymere,Propylen-Butadien-Copolymere, Isobutylen-Isopren-Copolymere, Ethylen-Alkylacrylat-Copolymere,Ethylen-Alkylmethacrylat-Copolymere,Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

4. Polystyrol, Poly(p-methylstyrol).

5. Copolymere von Styrol oder $\alpha$-Methylstyrol mit Dienen oder Acrylderivaten, wie beispielsweise Styrol-Butadien, Styrol-Maleinsäureanhydrid, Styrol-Acrylnitril, Styrol-Ethylmethacrylat, Styrol-Butadien-Ethylacrylat, Styrol-Acrylnitril-Methacrylat; Mischungen von hoher Schlagzähigkeit aus Styrol-Copolymeren und einem anderen Polymer, wie beispielsweise einem Polyacrylat, einem Dien-Polymeren oder einem Ethylen-Propylen-Dien-Terpolymeren; sowie Block-Copolymere des Styrols, wie beispielsweiseStyrol-Butadien-Styrol,Styrol-Isopren-Styrol-Styrol-Ethylen/Butylen-Styrol oder Styrol-Ethylen/Propylen-Styrol.

6. Pfropfcopolymere von Styrol, wie beispielsweise Styrol auf Polybutadien, Styrol und Acrylnitril auf Polybutadien, Styrol und Maleinsäureanhydrid auf Polybutadien, Styrol und Alkylacrylate oder Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, die beispielsweise als sogenannte ABS-, MBS-, ASA- oder AES-Polymere bekannt sind.

7. Polyvinylchlorid.

8. Mischpolymerisate des Vinylchlorids, welche durch die bekannten Verfahren hergestellt werden können (beispielsweise Suspensions-, Masse- oder Emulsionspolymerisation).

9. Mischpolymere des Vinylchlorids mit bis zu 30 Gew.-% an Comonomeren, wie beispielsweise Vinylacetat, Vinylidenchlorid, Vinylether, Acrylnitril, Acrylsäureester, Maleinsäuremono- oder -diester oder Olefinen, sowie Pfropfpolymerisate des Vinylchlorids.

10. Halogenhaltige Polymere, wie beispielsweise Polychloropren, Chlorkautschuk, chloriertes oder chlorsulfoniertes Polyethylen, Epichlorhydrin-homo- und - copolymere, insbesondere Polymere aus halogenhaltigen Vinylverbindungen, wie beispielsweise, Polyvinylidenchlorid, Polyvinylfluorid, Polyvinylidenfluorid; sowie deren Copolymere wie von Vinylchlorid-Vinylidenchlorid, Vinylchlorid-Vinylacetat oder Vinylidenchlorid-Vinylacetat.

11. Polymere, die sich von $\alpha,\beta$-ungesättigten Säuren und deren Derivaten ableiten, wie Polyacrylate und Polymethacrylate, Polyacrylamide und Polyacrylnitrile.

12. Copolymere der unter 11) genannten Monomeren untereinander oder mit anderen ungesättigten Monomeren, wie beispielsweise Acrylnitril-Butadien-Copolymere, Acrylnitril-Alkylacrylat-Copolymere, Acrylnitril-Alkoxyacrylat-Copolymere, Acrylnitril-Vinylhalogenid-Copolymere oder Acrylnitril-Alkylmethacrylat-Butadien-Copolymere.

13. Polymere, die sich von ungesättigten Alkoholen und Aminen bzw. deren Acylderivaten oder Acetalen ableiten, wie Polyvinylalkohol, Polyvinylacetat, - stearat, -benzoat, -maleat, Polyvinylbutyral, Polyallylphthalat, Polyallylmelamin.

14. Homo- und Copolymere von cyclischen Ethern, wie Polyethylenglykole, Polyethylenoxyd, Polypropylenoxyd oder deren Copolymere mit Bisglycidylethern.

15. Polyacetale, wie Polyoxymethylen, sowie solche Polyoxymethylene, die Comonomere wie beispielsweise Ethylenoxyd enthalten.

16. Polyphenylenoxyde und -sulfide und deren Mischungen mit Styrolpolymeren.

17. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte (Polyisocyanate-Polyole-Prepolymere).

18. Polyamide und Copolyamide, die sich von Diaminen und Dicarbonsäuren und/oder von Aminocarbonsäuren oder den entsprechenden Lactamen ableiten, wie Polyamid-4, Polyamid-6, Polyamid-6.6, Polyamid-6.10, Polyamid-11, Polyamid-12, Poly-2,4,4-trimethylhexamethylenterephthalamid, Poly-m-phenylenisophthalamid, sowie deren Copolymere mit Polyethern, wie beispielsweise mit Polyethylenglykol, Polypropylenglykol oder Polytetramethylenglykol.

19. Polyharnstoffe, Polyimide und Polyamid-imide.

20. Polyester, die sich von Dicarbonsäuren und Diolen und/oder von Hydroxycarbonsäuren oder den entsprechenden Lactonen ableiten, wie Polyethylenterephthalat, Polybutylenterephthalat, Poly-1,4-dimethylolcyclohexan-terephthalat, Poly-(2,2-bis-(4-hydroxyphenyl)-propan)-terephthalat,Polyhydroxybenzoate,sowie Block-Polyether-ester, die sich von Polyethylen mit Hydroxyendgruppen,Dialkoholenund Dicarbonsäuren ableiten.

21. Polycarbonate und Polyestercarbonate.

22. Polysulfone, Polyethersulfone und Polyetherketone.

23. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

24. Trocknende und nicht trocknende Alkydharze.

25. Ungesättigte Polyesterharze, die sich von Copolyestern gesättigter und ungesattigter Dicarbonsauren mit mehrwertigen Alkoholen, sowie Vinylverbindungen als Vernetzungsmittel ableiten, wie auch deren halogenhaltige, schwerbrennbare Modifikationen.

26. Vernetzbare Acrylharze, die sich von substituierten Acrylsäureestern ableiten, wie beispielsweise Epoxyacrylaten, Urethan-acrylaten oder Polyester-acrylaten.

27. Alkydharze, Polyesterharze und Acrylatharze, die mit Melaminharzen, Harnstoffharzen, Polyisocyanaten oder Epoxidharzen vernetzt sind.

28. Vernetzbare Epoxidharze, die sich von Polyepoxiden ableiten, beispielsweise von Bis-glycidylethern oder von cycloaliphatischen Diepoxiden.

29. Natürliche Polymere, wie Cellulose, Naturkautschuk, Gelatine sowie deren polymerhomolog chemisch abgewandelte Derivate, wie Celluloseacetate, -propionate und -butyrate, oder Celluloseether, wie Methylcellulose.

30. Mischungen der oben erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, PC/PBT, PVC/CPE, PVD/Acrylat, POM/thermoplastisches PUR, POM/Acrylat, POM/MBS, PPE/HIPS, PPE/Polyamid-6.6 und Copolymere, PA/HDPE, PA/PP, PA/PPE.

31. Natürlich vorkommende und synthetische organische Stoffe, welche reine Monomere oder Mischungen von Monomeren sind, wie beispielsweise Mineralöle, tierische und pflanzliche Fette, Öle und Wachse, oder Öle, Fette und Wachse auf Basis synthetischer Ester oder Mischungen dieser Stoffe.

32. Wäßrige Dispersionen von Natur- oder Synthesekautschuk.

Bevorzugte Polymere sind Polyolefine wie beispielsweise Polyethylen verschiedener Dichte wie PE-LD, PE-MD, PE-HD, PE-LLD und Polypropylen, sowie Polystyrol und Polyvinylchlorid. Besonders bevorzugt sind die Polyolefine.

Als Antistatikum enthält die erfindungsgemäße Kunststoff-Formmasse eine Verbindung der Formel I

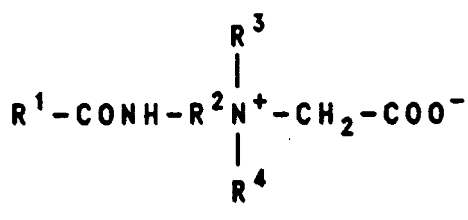

(I)

worin $R^1$ eine gesättigte oder ungesättigte aliphatische Kohlenwasserstoffgruppe mit 8 oder mehr C-Atomen, vorzugsweise eine $C_8$-$C_{22}$-, insbesondere $C_{12}$-$C_{14}$-Alkylgruppe ist,

$R^2$ eine $C_1$-$C_6$-, vorzugsweise $C_3$-Alkylgruppe ist und

$R^3$ und $R^4$ gleich oder verschieden sind und eine symmetrische oder unsymmetrische Alkylgruppe, Hydroxyalkylgruppe oder Polyoxyalkylengruppe bedeuten, vorzugsweise jedoch gleich sind und eine Methylgruppe bedeuten.

Besonders bevorzugt ist ein Betain, in welchem für $R^1$ die Gruppierung Fettsäureamidopropyl steht. Bevorzugte Fettsäure ist Kokosfettsäure:

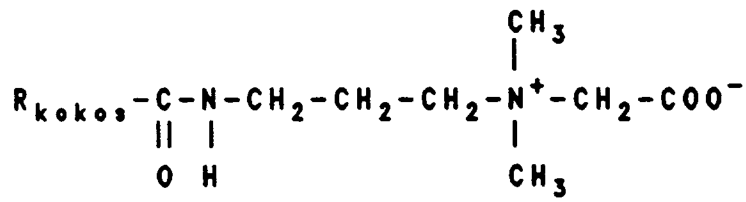

Das erfindungsgemäß einzusetzende Antistatikum wird vorzugsweise durch die Reaktion des Natriumsalzes der Monochloressigsäure mit Fettsäureamidopropyldimethylamin hergestellt. Demzufolge entsteht pro Mol des Betains auch ein Mol NaCl. Die Reaktion erfolgt in Lösung. Der trockene Rückstand enthält bei vollständiger, äquimolarer Umsetzung erhebliche Mengen NaCl.

Erfolgt die Synthese des Alkylamidoalkylbetains in wäßriger Lösung, so muß für die Zubereitung der antistatisch ausgerüsteten Formmasse, zuvor das Wasser abgetrennt werden, weil es die Verarbeitung behindert. Es konnte gezeigt werden, daß Alkylamidoalkylbetain auch in Gegenwart von anderen Tensiden, die als Lösemittel in der Synthese dienen, und die ihrerseits antistatisch wirken, hergestellt werden kann. Solche Tenside oder tensidähnliche Stoffe sind beispielsweise Polyethylenglykole, Polypropylenglykole, Ethylenoxid/Propylenoxid-Derivate mit oder ohne Kohlenwasserstoffrest-Rest, ethoxylierte Fettsäuren, ethoxylierte Fettalkohole und Tensidmischungen, gegebenenfalls noch unter Zusatz von Lösemitteln.

Verbindungen der Formel I sind an sich bekannt und teilweise im Handel erhältlich. Dabei enthalten Handelsprodukte neben Verbindungen der Formel I weitere Stoffe, die unter Umständen synthesebedingt vorhanden sind. Typisch ist ein Gehalt von etwa 10 bis 20 Gew.-% NaCl. Der NaCl-Gehalt ist für die antistatische Wirkung von Vorteil.

Verbindungen der Formel I werden oft in Lösung hergestellt. Das Lösemittel kann Wasser sein, so daß das Handelsprodukt vielfach in Form einer wässrigen Lösung anfällt und so auch verkauft wird. Die Lösung eignet sich für den direkten Auftrag auf Fertigteile, wobei das Antistatikum extern wirkt. Bei besonderen Syntheseverfahren erhält man das Antistatikum zusammen mit weiteren Substanzen, wobei das Verfahren es erlaubt, als Lösemittel ein anderes Antistatikum einzusetzen. Die so hergestellte Formulierung kann als Kombinationsantistatikum eingesetzt werden.

Stoffe der Formel I können mit anderen Stoffen, beispielsweise mit anderen Antistatika, gemischt werden.

Das erfindungsgemäß zu verwendende Antistatikum wird nach den üblichen Methoden in die Polymeren eingearbeitet. Die Einarbeitung kann beispielsweise durch Einmischen der Verbindung und gegebenenfalls weiterer Additive in die Schmelze vor oder während der Formgebung erfolgen. Auch durch Aufbringen der gelösten oder dispergierten Verbindung auf das Polymere direkt oder Einmischen in eine Lösung, Suspension oder Emulsion des Polymeren, gegebenefalls unter nachträglichem Verdunstenlassen des Lösemittels kann die Einarbeitung erfolgen. Die dem Polymeren zuzusetzende Menge liegt zur Einarbeitung bei 0,01 bis 6, vorzugsweise 0,06 bis 4, insbesondere 0,1 bis 3 Gew.-%, bezogen auf das auszurüstende Material. Die Verbindung oder Formulierung kann auch in Form eines Masterbatches oder Additivkonzentrates, welches die Verbindung oder Formulierung zu 2,5 bis 70 Gew.-% enthält, dem auszurüstenden Polymeren zugesetzt werden.

Zusätzlich kann die Kunststoff-Formmasse die üblichen Zusatzstoffe wie beispielsweise Antioxidantien, Weichmacher, Schlagzähmodifikatoren, Verarbeitungshilfsmittel und Stabilisatoren, Lichtschutzmittel, Gleitmittel, Füllstoffe, Flammschutzmittel, Treibmittel, Pigmente, Farbstoffe oder Färbemittel sowie andere Antistatika enthalten.

Es wurde gefunden, daß eine bestimmte Menge Natriumchlorid im Alkylamidopropylbetain die antistatische Wirkung noch signifikant verbessert, was sich in einem niedrigeren Oberflächenwiderstand, einer kürzeren Halbwertszeit und einer geringeren Aufladbarkeit des ausgerüsteten Kunststoffteils äußert. Weil NaCl in geringen Mengen in Formmassen allein kaum antistatisch wirkt, aber zusammen mit dem Alkylamidopropylbetain bessere antistatische Eigenschaften erbringt, liegt hier offenbar ein Synergismus beider Stoffe vor.

Die erfindungsgemäße Kunststoff-Formmasse besitzt den Vorteil, daß nach dem Verarbeitungsprozeß die antistatische Wirkung sehr rasch einsetzt. Die antistatische Ausrüstung setzt, im Vergleich zu den als hervorragend geltenden ethoxylierten Alkylaminen, rascher ein und bewirkt bei einer geringen Dosierung bereits am Herstelltag eine wirksame Verhinderung der Staubanziehung. Der Vorteil der erfindungsgemäß ausgerüsteten Formmasse besteht ferner darin, daß die Oberflächen der ausgerüsteten Artikel nicht durch Ausschwitzen feucht werden, wie es bei anderen Antistatika der Fall ist. Die Oberflächen bleiben siegelfähig, trocken und bedruckbar. Ein wichtiger Vorzug ist die niedrige Dosiermenge, die zur Erzielung des

Effekts notwendig ist. Die Dosiermenge unterschreitet noch die der als sehr effektiv bekannten ethoxylierten Alkylamine, ohne in gleicher Weise die Nachteile dieser Stoffklasse, wie Basizität, Korrosivität oder Fischtoxizität zu besitzen. Im Vergleich zu Substanzen, wie Alkylsulfonaten, Fettsäureestern und anderen ist die Dosierung der erfindungsgemäß zu verwendenden Substanzen in Formmassen ohnehin geringer. Die erfindungsgemäß zu verwendenden Substanzen führen in einer praktikablen Dosierung zu praktisch keinen negativen Effekten auf die Farbe und die Transparenz der Formmasse. Bestimmte Alkylamidoalkyl Betaine besitzen noch den Vorteil, Feststoffe zu sein, die, beispielsweise als Sprühpulver konfektioniert, sich der auszurüstenden Formmasse auf technisch einfache Weise zudosieren lassen.

Zur Verdeutlichung der Erfindung dienen die folgenden Beispiele.

## Beispiele

In den nachfolgenden Beispielen wurden Antistatika nach Formel I in Kunststoff--Formmassen eingearbeitet. An den aus der Formmasse hergestellten Prüfkörpern wurde der Oberflächenwiderstand nach DIN 53482 und die Halbwertszeit bestimmt. Als Vergleich wurden einige handelsübliche bekannte Antistatika eingesetzt.

Als Vertreter von Substanzen der Formel I dienten:

(A) Kokosamidopropyl Betain, Produkt mit etwa 15 bis 20 % NaCl.

(A1) Produkt wie A) aber durch Extraktion mit Ethanol entsalzt (NaCl < 2 %).

(A2) Produkt wie (A), synthetisiert in ethoxyliertem Kokosfettalkohol als im Produkt verbleibendes Lösemittel.

(A3) Talg/Oleyl-(8:2)-amidopropyl Betain.

Als Vergleich dienten:

(B) Ethoxyliertes Fettamin (N,N-Bis-(2-hydroxyethyl)kokosfettamin).

(C) Fettsäureester

(D) Ethoxyliertes Fettsäureamid

(E) Lauryl Betain

Als Vergleichswert wurden noch die antistatischen Eigenschaften des reinen technischen Polymers, nach identischer Verarbeitung gemessen.

Der Oberflächenwiderstand wurde nach der Strom-Spannungsmethode gemessen. Die Meßspannung dabei beträgt $10^6$-$10^{15}$ Ω. Die angegebenen Werte des Oberflächenwiderstandes und Halbwertszeit sind jeweils Mittelwerte aus mindestens sechs Einzelmeßwerten. Die Ergebnisse wurden aus dem Wert des Logarithmus des Oberflächenwiderstandes gemittelt. Meßwerte die oberhalb des Meßbereichs von $10^{15}$ Ω lagen wurden zur Mittelung mit '15' gewertet. Die Halbwertszeit wurde über 60 Sekunden verfolgt. Meßergebnisse, bei welchen die Ladung innerhalb von 60 Sekunden nicht auf die Hälfte der Anfangsladung gefallen war, wurden in der Ergebnismittellung mit '60' Sekunden gewichtet. Bei den angegebenen gemittelten Halbwertszeiten sind also Werte oberhalb etwa 40 Sekunden ungenau. Betrug die Halbwertszeit bei allen Messungen mindestens 60 Sekunden, wurden die Ergebnisse mit '>60' gekennzeichnet. Die Werte in den folgenden Tabellen wurden zum angegebenen Zeitpunkt nach der Prüfkörper-Herstellung gemessen. Nach der Herstellung der Prüfkörper wurden diese in einem Raum mit Normklima (Temperatur: 23 °C, rel. Luftfeuchte 50 %) gelagert und gemessen.

An Prüfkörpern wurde außerdem der Yellownessindex und die Tranparenz bestimmt.

### Beispiel 1

Polyethylen niederer Dichte (PE-LD)

PE-LD Pulver wurde mit den in der Tabelle angegebenen Mengen der jeweiligen Testsubstanz in einem Mischer (Papenmeier, Type TLHK3) während der Mischzeit von 3 Minuten bei Umgebungstemperatur gemischt. Die Mischung wurde zweimal mittels eines Extruders (Leistritz LSM 30/34) granuliert (Zonen 1 bis 7, Temperaturen: 150/155/160/170/180/190/190 °C). Die maximale Massetemperatur bei der Extrusion erreichte ca. 205 °C. Die Strangkühlung vor dem Granulieren erfolgte durch ein Wasserbad. Aus den so erhaltenen Granulaten wurden mit einer Spritzgußmaschine (Windsor SP 50, Zonen 1 bis 4, Temperaturen: 190/200/200/210 °C) bei der Massetemperatur von ca. 220 °C Platten spritzgegossen. Die Dicke der Platten betrug 1 mm.

Tabelle 1

| antistatische Ausrüstung von PE-LD Formmassen mit (A) und (A1) | | | | | |
|---|---|---|---|---|---|
| | | Am 1. Tag nach Herstellung | | Am 7. Tag nach Herstellung | |
| | | Oberflächenwiderstand | Halbwertszeit | Oberflächenwiderstand | Halbwertszeit |
| Produkt | Dosierung | RO [log Ω] | Dauer [sec] | RO [log Ω] | Dauer [sec] |
| PE-LD | - | > 14 | > 60 | > 14 | > 60 |
| (A) | 0,2 | 9,6 | 3,3 | 9,4 | < 1 |
| (A1) | 0,2 | 11,7 | 25,8 | 9,6 | < 1 |

Tabelle 2

| Färbung und Transparenz der Prüfkörper (PE-LD) | | | |
|---|---|---|---|
| Produkt | Dosierung | Yellownessindex | Transparenz [%] |
| PE-LD | - | -0,5 | 44,7 |
| (A) | 0,2 | -0,3 | 44,1 |
| (B) | 0,2 | 2,8 | 40,9 |

Tabelle 3

| Vergleich verschiedener Produkte, Oberflächenwiderstand und Halbwertszeit (PE-LD) | | | | | |
|---|---|---|---|---|---|
| | | Am 1. Tag nach Herstellung | | Am 7. Tag nach Herstellung | |
| | | Oberflächenwiderstand | Halbwertszeit | Oberflächenwiderstand | Halbwertszeit |
| Produkt | Dosierung | RO [log Ω] | Dauer [sec] | RO [log Ω] | Dauer [sec] |
| PE-LD | - | > 14 | > 60 | > 14 | > 60 |
| (A) | 0,1 | 10,0 | 3,4 | 9,5 | < 1 |
| (A2) | 0,1 | 13,4 | 41,8 | 9,8 | 2,3 |
| (A3) | 0,1 | 12,9 | > 60 | 11,7 | 6,1 |
| (B) | 0,1 | 11,4 | 5,2 | 9,7 | < 1 |
| (E) | 0,1 | > 14 | > 60 | > 14 | > 60 |

Beispiel 2

Herstellung von Prüfkörpern aus Polyethylen hoher Dichte (PE-HD)

PE-HD Pulver (Dichte 0,96 g/cm$^3$, MFI 190/27 g/10 min, MFI 190/5 25 g/10 min) wurde mit den in der Tabelle angegebenen Mengen der jeweiligen Testsubstanz in einem Mischer (Papenmeier, Type TLHK3) während der Mischzeit von 3 Minuten bei Umgebungstemperatur gemischt. Die Mischung wurde zweimal mittels eines Extruders (Göttfert Meßextruder, Type 015, Rheologische Schnecke 5/2, Zonen 1 bis 3, Temperaturen 180/190/210 °C) granuliert. Die Strangkühlung vor dem Granulieren erfolgte durch ein Wasserbad. Aus den so erhaltenen Granulaten wurden mit einer Spritzgußmaschine (Windsor SP 50; Zonen 1 bis 4, Temperaturen 190/200/200/210 °C) bei der Massetemperatur von ca. 220 °C Platten spritzgegossen. Die Dicke der Platten betrug 1 mm.

Tabelle 4

| Oberflächenwiderstand und Halbwertszeit gemessen an PE-LD Formmassen | | | | | |
|---|---|---|---|---|---|
| | | Am 1. Tag nach Herstellung | | Am 14. Tag nach Herstellung | |
| | | Oberflächenwiderstand | Halbwertszeit | Oberflächenwiderstand | Halbwertszeit |
| Produkt | Dosierung | RO [log Ω] | Dauer [sec] | RO [log Ω] | Dauer [sec] |
| PE-LD | - | > 14 | 60 | > 14 | 60 |
| (A) | 0,5 | 10,9 | 27 | 9,0 | 1 |
| (A) | 0,1 | 14,5 | 60 | 9,0 | 2 |

Beispiel 3

Herstellung von Prüfkörpern aus Polypropylen (PP)

PP Pulver (MFI 230/5 3 g/10 min) wurde mit den in der Tabelle 5 angegebenen Mengen der Testsubstanz in einem Mischer (Papenmeier, Type TLHK3) während der Mischzeit von 3 Minuten bei Umgebungstemperatur gemischt. Die Mischung wurde zweimal mittels eines Extruders (Göttfert Meßextruder, Type 015, Rheologische Schnecke 5/2, Zonen 1 bis 3, Temperaturen 200/220/240 °C) granuliert. Die Strangkühlung vor dem Granulieren erfolgte durch ein Wasserbad. Aus den so erhaltenen Granulaten wurden mit einer Spritzgußmaschine (Windsor SP 50; Zonen 1 bis 4, Temperaturen 200/210/210/220 °C) Platten spritzgegossen. Die Dicke der Platten betrug 1 mm.

Tabelle 5

| Oberflächenwiderstand und Halbwertszeit gemessen an PP-Formmassen | | | | | | | |
|---|---|---|---|---|---|---|---|
| | | Oberflächenwiderstand RO [log Ω] | | | Halbwertszeit Dauer [sec] | | |
| Produkt | Dosierung | 1. Tag | 14. Tag | 52. Tag | 1. Tag | 14. Tag | 52. Tag |
| PP | | > 14 | > 14 | > 14 | > 60 | > 60 | > 60 |
| (A) | 1,0 | 10,0 | 9,1 | 8,6 | < 1 | - | < 1 |
| (A) | 0,5 | 15,0 | 10,7 | - | > 60 | 22 | - |
| (C) | 2,0 | 14,1 | 10,8 | 13,2 | > 60 | 2 | 53 |
| (D) | 0,5 | 15,0 | 12,2 | - | > 60 | 25 | - |

**Patentansprüche**

**1.** Antistatisch ausgerüstete Kunststoff-Formmasse, bestehend aus 94 bis 99,99 Gew.-%, bezogen auf die Formmasse, eines thermoplastischen oder duroplastischen Kunststoffs und 0,01 bis 6 Gew.-%, bezogen auf die Formmasse, einer Verbindung der Formel I

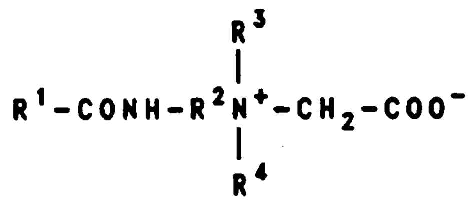

(I)

worin $R^1$ eine gesättigte oder ungesättigte aliphatische Kohlenwasserstoffgruppe mit 8 oder mehr C-Atomen ist,
$R^2$ eine $C_1$-$C_6$-Alkylgruppe ist und
$R^3$ und $R^4$ gleich oder verschieden sind und eine symmetrische oder unsymmetrische Alkylgruppe, Hydroxyalkylgruppe oder Polyoxyalkylengruppe bedeuten.

**2.** Kunststoff-Formmasse nach Anspruch 1, dadurch gekennzeichnet, daß sie eine Verbindung der Formel I

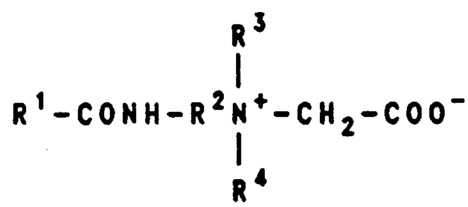

(I)

worin $R^1$ eine gesättigte oder ungesättigte aliphatische Kohlenwasserstoffgruppe mit 8 oder mehr C-Atomen ist,
$R^2$ eine $C_1$-$C_8$-Alkylgruppe ist und
$R^3$ und $R^4$ gleich oder verschieden sind und eine symmetrische oder unsymmetrische Alkylgruppe, Hydroxyalkylgruppe oder Polyoxyalkylengruppe bedeuten.

**3.** Kunststoff-Formmasse nach Anspruch 1, dadurch gekennzeichnet, daß sie zusätzlich Antioxidantien, Weichmacher, Schlagzähmodifikatoren, Verarbeitungshilfsmittel und Stabilisatoren, Lichtschutzmittel, Gleitmittel, Füllstoffe, Flammschutzmittel, Treibmittel, Pigmente, Farbstoffe oder Färbemittel oder andere Antistatika enthält.

**4.** Antistatikum, im wesentlichen bestehend aus einer Verbindung der Formel I

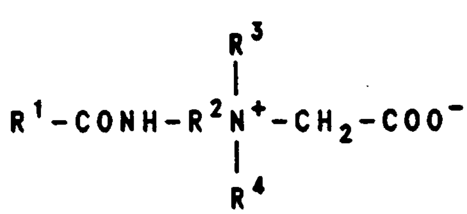

(I)

worin $R^1$ eine gesättigte oder ungesättigte aliphatische Kohlenwasserstoffgruppe mit 8 oder mehr C-Atomen ist,

$R^2$ eine $C_1$-$C_6$-Alkylgruppe ist und
$R^3$ und $R^4$ gleich oder verschieden sind und eine symmetrische oder unsymmetrische Alkylgruppe, Hydroxyalkylgruppe oder Polyoxyalkylengruppe bedeuten.